# EUROPEAN PATENT APPLICATION

(11) **EP 1 134 074 A1**
(43) Date of publication of application: **19.09.2001**
(21) Application number: 00200877.9
(22) Date of filing: 13.03.2000
(51) Int. Cl.: B32B 27/42, C08K 7/02

(54) **Reinforced laminar product of a thermosetting aminoplast resin mixture and fibrous material**

(71) Applicant: DSM N.V., 6411 TE Heerlen (NL); PERSTORP AB, 284 80 Perstorp (SE)
(72) Inventor: Handels, Johannes Wendelinus Hubertus, 6101 KE Echt (NL); Snuverink Ook Lansink, Hermanus Peter, 6141 AN Sittard (NL); Lambi, Ronald John, 6163 MA Geleen (NL); Lindberg, Oskar, 25234 Helsingborg (SE); Hendriks, Ferdinand Leonardus Eliseus, 6432 BV Hoensbroek (NL)

(57) **Abstract**

The invention relates to a reinforced laminar product comprising 5 to 50 wt.% of fibrous material and 95 to 50 wt.% of a filler containing thermosetting aminoplast resin mixture as matrix, between a removable first carrier sheet and a removable second carrier sheet, wherein at least 60 wt.% of the fibrous material consists of chopped fibres having an average length in the range of from 10 to 100 mm, which are 2D-randomly distributed in the resin mixture, and wherein the free moisture content of the laminar product is less than 10 wt.%. The invention also relates to a sheet moulding compound (SMC) production process for manufacturing such product and to moulded parts prepared therefrom.

## Description

The invention relates to a reinforced laminar product comprising chopped fibrous material and a thermosetting aminoplast resin mixture as matrix brought together between supporting sheets. The invention also relates to a sheet moulding compound (SMC) production process for manufacturing such product and to moulded parts prepared therefrom. As used herein the term aminoplast comprises the condensation products of amino compounds and an aldehyde. The amino compounds in aminoplasts are usually selected from the groups of ureum and its derivatives, and of triazines and derivatives thereof, e.g. triamino-S-triazine (also known as melamine). The melamine-aldehyde (i.e. melamine-formaldehyde) condensation product is hereinafter also referred to as MF. Also combinations of ureum and melamine aldehyde condensation products can be used. These can be referred to as MUF.

Reinforced laminar products are disclosed in US-A-4, 101, 475. In US-A-4,101,475, a sheet moulding compound (SMC) is described which is made of a thermosetting resin mixture, in particular an MF resin, and short, approximately 6 mm, chopped fibrous material, preferably inorganic fibrous material, in an amount between 1 and approximately 30% based on the slurry solids. Large amounts of fillers, e.g. aluminium trihydrate (of up to 80 wt.%) are also present in the laminar products of US-A-4,101,475 in order to provide materials with adequate flame resistant properties.

The known product, separated by polyethylene sheets (or in other words: films or carrier foils, etc.), is cut into sheets and then allowed to thicken for 24 to 96 hours in order to become handleable and slightly sticky so that it can be used as surfacing for any type of substrate or so that a number of sheets can be pressed together and cured into a dense board. Since the SMC's in the known process will lead to relatively brittle cured products, the dense board will not have suitable impact strength unless the boards would be produced in thicknesses of at least about 1 cm. Without the abovementioned thickening handling of the products is impossible. For instance, removing the polyethylene sheets will be difficult. Furthermore, the SMC's cannot be handled by closed mould techniques because the high water content (free moisture content) leads to foaming and/or blistering. In closed moulds applications the final products obtained would yield boards which show porosity to a greater or lesser extent. The water present in the sheets partly serves as foaming agent.

The process of US-A-4,101,475 is therefore considered to be disadvantageous for preparing sheet moulding compounds which have to be used in closed moulds techniques for the production of moulded parts for use as structural parts for being used in public transport etc., e.g. seat shells, tables, appliances, wall panels and so on.

As a consequence alternative solutions to the problems mentioned above have been looked for, and so far such solutions have been found in applying the fibrous material in the form of fleeces or mats. For instance US-A-4,906,505 and EP-A-0845346 can be mentioned as references teaching such alternative approaches for overcoming the problems of the prior art. The latter of these references in addition requires a needling step for treating the fleeces or mats used. However, also such alternative solutions have quite some disadvantages in technical operation, for instance, during the drying step in an oven which is required in such process. Especially when in subsequent production lots materials of different colours are being produced the contamination during said drying step may be substantial. Moreover, additional process steps such as the needling step lead to impairment of mechanical properties of the products obtained.

The first object of the present invention, therefore, is to overcome the still existing need for providing a reinforced laminar product which does not exhibit the abovementioned problems of providing compounds which are too wet to be suitable for being used in closed mould techniques and which - due to the presence of short fibres - cannot yield moulded structural parts of sufficient strength at a thickness of less than about 1 cm. Another object of the present invention is to provide an improved and cost-efficient process for producing a laminar product comprising a thermosetting aminoplast resin mixture and fibrous material which does not have the abovementioned disadvantages.

Surprisingly, this is being achieved when the reinforced laminar product comprises a removable first carrier sheet and a removable second carrier sheet, between which two sheets
(a) 95 to 50 wt.% of an aminoplast resin mixture, 20 to 90 wt.% of the resin mixture consisting of filler and/or other additive materials and
(b) 5 to 50 wt.% of fibrous material is contained,

wherein at least 60 wt.% of the fibrous material consists of chopped fibres having an average length in the range of from 10 to 100 mm, the chopped fibres being 2D-randomly distributed in said resin mixture and
wherein the free moisture content of the laminar product is less than 10 wt.% of the total weight of the laminar product.

The thermosetting aminoplast resin in the laminar product according to the invention can, in principle, be any aminoplast resin (as is obtained by condensation of an amino compound and an aldehyde), particularly any aminoplastic (form)aldehyde resin. Examples of such resins are those which contain ureum or melamine as amino compound; also MUF combinations may be used. Preferably, a melamine-aldehyde is used, because of its superior mechanical, surface and flame-resistant properties. The capability of pigmentation is also improved further. The advantages of the products according to the invention are manifested, in particular, if the thermosetting resin is an MF resin.

The aminoplast resin can be manufactured in a manner known to the person skilled in the art by reacting an amino compound and formaldehyde in water. The ratio of, for example, formaldehyde and melamine is, normally speaking, between 1.0 and 2.5, preferably between 1.1 and 2.0. It is also possible to add plasticizers such as, for example, sorbitol, ε-capro-lactam, ethylene glycol, trioxitol, toluenesulphonamide and the family of guanamines (benzo-, aceto- and diguanamines).

According to this invention the free moisture content of the laminar product is less than 10 wt.% of the total weight of the laminar product before any of the first and second carrier sheets have been removed.

The free moisture content as used in this application, is the moisture content as is determined by percentage of weight loss when the laminar product is dried in a ventilation oven at 80°C for 16 hours. Determination of the free moisture content may be done with or without carrier foils.

Because, according to the invention, the laminar product has been dried between sheets, direct processing in closed moulds is possible afterwards, upon removal of the carrier sheets, without problems of foaming, blistering and porosities in the final product.

20 to 90 wt.% of the aminoplast resin mixture present in the laminar product consists of filler and/or other additive materials. The laminar product according to the invention may contain all kinds of fillers. Said fillers are the same as the conventional fillers for laminar products based on, for example, unsaturated polyester resin. For example, lime, calcium carbonate, clay, carbon particles, silica, quartz and/or metal particles are used as fillers. Preferably, the laminar product according to the invention contains, in addition to melamine-formaldehyde resin, also aluminium trihydrate and calcium carbonate as filler. Moreover, the laminar product may also contain catalysts, mould release agents, pigments and other conventional additives. Conventional catalysts, such as, for example, p-toluenesulphonic acid and boric acid, can be used as catalysts.

Within the scope of this application, the fibrous material may be inorganic fibres (natural and/or synthetic), e.g. mineral fibres, but also organic fibres (natural and/or synthetic) may be used as part of the fibrous material.

In principle, all commercially available fibres can be used as fibrous material. Suitable fibres are, for example, carbon fibres, glass fibres, rock fibres, cottonwool fibres, fibres based on highly oriented thermoplastics, such as aramids and UHMWPE (ultra-high molecular weight polyethylene) fibres, polyamide fibres and cellulose fibres. Particularly suitable fibres are glass fibres.

According to the invention at least 60 wt.% of the fibrous material consists of chopped fibres having an average length in the range of from 10 to 100 mm. The chopped fibres are 2D-randomly distributed in the resin mixture. As used herein, 2D-randomly distributed means that the chopped fibres are more or less evenly, in random orientations, distributed in a plane which can be considered to be about parallel to the planes of the first and second removable carrier sheets (or the upper and lower planes of the laminar product after removal of those sheets). In practice this can be easily achieved by distributing the chopped fibres directly from a chopping unit onto a first layer of resin mixture supported on the first carrier sheet and applying on top thereof a second layer of resin mixture supported by the second carrier sheet, thereby making a sandwich which may be homogenized by passing the laminar product through a series of rollers so that the fibrous material is thoroughly impregnated, as in standard SMC processes.

The aminoplast resin mixture in the laminar product according to the invention is preferably a melamine-aldehyde resin mixture.

Preferably, the laminar product according to the invention has a free moisture content in the range of from 0.3 to 10 wt.% of the total weight of the laminar product, more preferably in the range of from 0.5 to 6 wt.% and most preferably in the range of from 1.0 to 3.0 wt.%. In the most preferred range the moulded end products obtained have a completely homogeneous appearance and are porosity-free. These effects are even more pronounced when the laminar products also contain pigments and/or other colouring materials. If the laminar products contain less than 0.3 wt.% of free moisture, flow moulding is no longer feasible.

The chopped fibrous material in the laminar product according to the invention preferably consists of chopped glass fibres having an average length in the range of from 12 to 60 mm. Usually glass fibres are being produced and commercially available in the form of (assembled) rovings of about 1200 to 4800 tex in total, the rovings being composed out of a number of strands, having tex numbers in the range of some hundreds, or so-called split strands, having tex numbers of 100 or lower. The tex number is a measure for the weight per unit length (g/km) of the fibrous material.

It is especially advantageous that the chopped glass fibres are composed out of strands or split strands having tex numbers in the range of from 18 to 300 tex, preferably out of split strands of from 35 to 100 tex.

Preferably glass fibre rovings are used such as those which conventionally can be used in so-called PP GMT (polypropylene glass mat reinforced thermoplastics) needling processes and which contain sizings suitable for use in (partially) maleic acid anhydride grafted polypropylene. Usually such sizings are aminopropyl silane sizings.

The type of the fibrous material, however, can be chosen within wide limits. When glass fibres are being used, suitable glass fibres are, for example, rovings having strand or split-strand tex numbers in the range of from 18 to 300 tex, for instance PPG 4854, PPG 6428, OCF 357 D AA, OCF 954/B, Vetrotex P215 and Vetrotex P243 rovings of in total about 2400 tex. Very suitable glass rovings are the PPG 4854 2400 tex roving with a strand tex equal to 68, and Vetrotex P243.

In the laminar product according to the invention, preferably at least 85 wt.% of the fibrous material consists of chopped fibres which are 2D-randomly distributed in the resin mixture.

It can be advantageous that part of the fibrous material used in the laminar products according to the invention consists of continuous fibres (rovings). Such continuous fibres, particularly when they are present in the laminar product unidirectionally and in appropriate amounts, may provide to the product additionally improved mechanical properties in specific directions.

According to the (product and process of the) invention, as a result of using long chopped glass fibres (10-100mm) and of using a drying step after the impregnation of the fibres, a laminar product is obtained which is directly suitable for compression moulding in closed moulds making structural parts with small thickness (about 2 - 5 mm).

The drying step in the process according to the invention may be performed most conveniently if a proper choice of carrier sheets is made. The removable first and/or second carrier sheets in the laminar products according to the invention therefore preferably have a permeability for water vapor at 23°C of 10 g/m²•day or more, preferably 25 g/m²•day or more as determined according to DIN 53122. This permeability for water vapor is especially important during the production process for the laminar products. The skilled man will be readily able to find which carrier sheets are suitable for being applied according to the invention. Many types of suitable carrier sheets are commercially available and their properties, e.g. as to permeability for water vapor can be readily determined or are available from the pertaining product information or supplier's information.

The two carrier sheets (films) on both sides of the laminar products will prevent contamination of the laminar product during production, handling and transport. This will enable the laminar products to be applied in such market segments where the outer appearance of the final products is critical.

The laminar products having a free moisture content of less than 10 wt.% can be used in closed mould techniques. They also can be used for the production of homogeneous, relatively thick materials, whereas the laminar products according to the state of the art are only suitable for production of relatively thin materials or - in case of production of thicker materials - are only being used as a top-layer attached to a backing.

Most preferably, the fibrous material in the laminar product according to the invention consists of glass fibres and contains less than 1 wt.% of sizing and binder material as determined by the loss-on-ignition test. In such case laminar products with best homogeneity and outer appearance are being obtained.

If the glass fibres contain more than 1 wt.% of sizing and binder material as determined by the loss-on-ignition test, then more fibrous material remains visible at the surface.

In a preferred embodiment of the present invention, the aminoplast resin mixture comprises a melamine-aldehyde resin and a fire retardant additive, the amount of melamine-aldehyde resin being from 15 to 25 wt.%, more preferably from 16 to 20 wt.%, of the total weight of the laminar product. Suitable materials (fillers) which can be used as fire retardant additives are, for instance, aluminium trihydrate (which advantageously also acts as a smoke suppressant), calcium or magnesium carbonate, magnesium hydroxide, barium sulphate, kaolin, talcum, silicon dioxide, metal oxides, e.g. Fe₂O₃ or TiO₂, wollastonite, glass spheres, mica, quartz, or mixtures of these. Aluminium trihydrate and calcium carbonate are most preferred, and preferably amount to at least 75 wt.% of the fire retardant additive. In general, most preferably fire retardant additives are being used which have relatively high density. These laminar products, apart form being very suitable for processing by flow moulding techniques, have outperformingly good fire resistant properties which are falling within the range classified as A2-materials according to the new European Union proposal (pr. EN 13 501-1) for such classification. The A2-classification (as proposed) requires that the material
(a) is classified as "(A/B) S1" according to the Single Burning Item (SBI) test, and
(b) has a caloric value of less than 3000 kJ/kg according to the standard of ISO-1716 (1973).

The invention also relates to a novel (SMC-)process for manufacturing reinforced laminar products comprising fibrous material and a thermosetting aminoplast resin mixture as matrix. In this new process
5 to 50 wt.% of a fibrous material of which at least 60 wt.% of the fibrous material consists of chopped fibres having an average length in the range of from 10 to 100 mm is being 2D-randomly distributed and impregnated in 95 to 50 wt.% of an aminoplast resin mixture
of which resin mixture 20 to 90 wt.% consists of filler and/or other additive materials,
and which resin mixture has a viscosity in the range of from 5 to 250 Pa•s, preferably of from 20 to 100 Pa•s, between a removable first carrier sheet and a removable second carrier sheet,
thereby obtaining a sheet moulding compound which is dried, without removal of the carrier sheets, to a free moisture content of less than 10 wt.%.

The content of chopped fibrous material in the laminar product according to the invention may be controlled by the chopper speed. Fillers and/or any other additives may be added to the aminoplast resin mixture used separately, simultaneously with the chopped fibres, or may be present in the aminoplast resin mixture as such. For details about the meaning of the various terms used in describing this process reference is made to previous parts of this application.

The skilled man will be aware that the aminoplast resin can also be prepared from solid aminoplast materials, for instance from spray-dried resin, by adding - at an elevated temperature, e.g. preferably in the range of 50 - 60°C - an adequate amount of water (usually up to about 25 to 75 wt.% of water as compared to the solid material) in order to obtain a resin of suitable viscosity.

Most suitable methods for preparing a resin mixture start from liquid resins, but in such case the water content of the resin mixture is relatively high. It is possible to lower the water content by adding some amount of dry resin to such liquid resin so that, before the drying of the laminar product, a free moisture content as low as even about 15 wt.% can be reached. At such levels of free moisture content the viscosity of the resin mixture is still acceptable. If necessary, a small amount of additives, e.g. BYK 154, may be supplied to adjust the resin mixture viscosity

It is important to note that the viscosity of the resin mixture used in this process should be between 5 and 250 Pa•s, preferably even between 20 and 100 Pa•s. This viscosity is considerably higher than the viscosity of that of resin mixtures used in the impregnation of non-woven mats in techniques of the prior art, for instance as described in EP-A-0845346. Advantageously as a result of these relatively high viscosities of the resin mixtures pigment and filler particles are being dispersed better in the resin mixture. This leads to less sedimentation of pigments and fillers in the laminar products. For instance, when producing granite-look products, relatively large pigment particles have to be used which tend to settle in the processes of the prior art, but can now be made without any problem of sedimentation using the process according to the invention. Also the risk for occurrence of pigment spots in the final moulded product during the manufacture of the laminar product is diminished. Moreover, air entrapment is less.

Preferably the aminoplast resin mixture used in the process according to the invention is a melamine-aldehyde resin mixture.

Drying of the sheet moulding compound in the last step of the process of the invention, without removal of the carrier sheets, to a free moisture content of less than 10 wt.% is easy. The laminar products so obtained can be processed by closed mould techniques, but also other techniques may be used.

In the process according to the invention, the sheet moulding compound is preferably dried to a free moisture content in the range of from 0.3 to 10 wt.% of the total weight of the laminar product, more preferably in the range of from 0.5 to 6 wt.% and most preferably in the range of from 1.0 to 3.0 wt.%.

It is preferred that the laminar product, before being dried, is pre-cut according to desired dimensions, for instance, equal to the inlay pattern for the mould used. The pre-cutting before drying prevents the occurrence of bare glass fibres at the cutting edges.

A residual free moisture content of less than 10 wt.%, particularly in the ranges as mentioned above, has been found to give good results. Too high water contents may result in pores, blisters, whitening (colour fading) and other defects in the final product, which also adversely affects the mechanical properties.

The moisture can easily be removed, for instance, in an oven through which the sheet moulding compound is transported, without removing the carrier sheets. Also drying off-line, at relatively low temperature, for instance at ambient temperature or even up to about 100°C, in drying chambers is possible. The latter embodiments of drying may be performed while storing the SMC's until the free moisture content has reached a desired value. Because the drying process is rather quick, especially when spacers are being used between the separate SMC's, for instance, by separating the SMC's by individual layers of corrugated cardboard or otherwise, the low free moisture contents are being reached already within a few days at 60°C. Drying in an oven, of course, is quicker. The drying may also be assisted by vacuum.

Part of the drying also can be achieved by the presence, in the aminoplast resin mixture matrix, of desiccants or of products like gypsum and/or cement. Such additives have a function different from that of conventional thickening agents, which are mainly being used for influencing the viscosity of the sheet moulding compounds. This way of (internal) drying, however, does not lead to a weight decrease of the laminar product, but merely to lowering the content of free moisture in the compound.

It is preferred that the chopped fibrous material, as used in the process according to the invention, consists of glass rovings having an average length in the range of from 12 to 60 mm. In particular, the chopped fibrous material preferably has strand tex numbers in the range of from 18 to 300 tex, especially preferred in the range of from 35 to 100 tex.

In the process according to the invention preferably at least 85 wt.% of the fibrous material is being 2D-randomly distributed in the resin mixture.

In a preferred embodiment of the invention also continuous fibres are being distributed and impregnated in the resin mixture.

The removable first and/or second carrier sheets preferably have a permeability for water vapor at 23°C of 10 g/m²•day or more, preferably 25 g/m²•day or more, as determined according to DIN 53122.

It is most advantageous in the process according to the invention that the fibrous material used consists of glass fibres and contains less than 1 wt.% of sizing and binder material, as determined by a loss-on-ignition test. In such case laminar products with best homogeneity and outer appearance are being obtained.

Apart from solving the problems of the prior art as mentioned in the introduction, the process according to the invention has the following advantages:
- the process can be performed more consistently, i.e. the properties of the products obtained show less variations over subsequent production runs;
- overall yields of the process are higher because of less start-up losses, less contamination of the products and equipment (in particular of the drying oven), less fouling of impregnating parts of the equipment, etc.
- the production process to form the wet laminar products (impregnation step) is very rapid as compared with the production rate of prior art routes. Laminar products can be produced at a speeds of up to 10 m/min and even higher. Until now this was impossible with impregnation processes (e.g. of EP-A-0845346). Moreover, in such prior art processes the consistency of the products made was much more sensitive to speed variations.

The laminar products made according to the invention can conveniently be used, upon removal of the first and second carrier sheets, in closed mould processes, e.g. for flow moulding. In such processes, the inlay pattern usually will be smaller than the dimensions of the moulding part. However, using the laminar parts obtained according to the invention, also 100% inlay is possible. During the flow moulding, the fibrous material present in the laminar products of the invention is evenly spread over the final moulded parts, thereby providing suitable mechanical properties homogeneously throughout the product; the fibrous material also will be adequately spread into projections, ridges and rims. The pressure used in such flow moulding processes is usually between 1 and 20 MPa (between about 10 and 200 bar), preferably between 5 and 10 MPa (between about 50 and 100 bar). The usual moulding temperature, which also ensures the curing of the thermosetting resin is between 50 and 200°C, preferably between 140 and 170°C.

The present invention therefore also relates to use of the laminar products according to the invention or obtained through a process according to the invention, upon removal of the first and second carrier sheets, in a closed mould production process.

Finally, the invention also relates to moulded products obtained in a closed mould process with the aid of a laminar product according to the invention or obtained through a process according to the invention.

Very satisfactory mechanical properties of the moulded products are achieved if 10 - 35% by weight of fibrous material and 90 - 65% by weight of resin mixture are used, the resin mixture preferably containing 30 - 70% by weight of fillers and 70 - 30% by weight of aminoplastic formaldehyde resin. The laminar products according to the invention products obtained have better isotropic properties than the products of the state of the art and, as a result, there are no problems of warpage, etc. which often occur in moulded products produced differently.

The products obtained have very good mechanical properties as a result of the excellent flow of the product according to the invention during the flow moulding. Typical mechanical properties for an average glass-fibre content of 20% by weight and glass fibre lengths of between 12 mm and 60 mm are: flexural strength (ISO 178) of 140 - 250 MPa, flexural modulus (ISO 178) of 15 - 25 GPa and Charpy impact strength (ISO 179) of 25 - 80 kJm⁻².

It is an additional advantage of the laminar products according to the invention is that mechanical properties are obtained which are in the same range as for products of the prior art, but at a lower content of fibrous material in the product.

Laminar products having excellent fire retardant properties are obtained if the aminoplast resin mixture comprises a melamine-aldehyde resin and a fire retardant additive, the amount of melamine-aldehyde resin being from 15 to 25 wt.%, more preferably from 16 to 20 wt.%, of the total weight of the laminar product.

The laminar products can be used particularly satisfactorily in the manufacture of large moulded parts having, for example, ribs and projections, seat shells, casings, fittings, bodywork components for lorries and cars. Particularly suitable applications are seats and wallpanels in trains and public transport (including aircraft), wall claddings for indoor or outdoor use, casings for electronic parts, such as used for example in ticketing and money provider systems, as well as kitchen appliances, such as cooker-plate frames, oven doors and the like. The particularly good fire-resistant properties, heat resistance, high-temperature dimensional stability, scratch resistance and good capability of pigmentation of the product are of great advantage.

The invention will now be explained by reference to the following examples without being limited thereto.

### Example I General description

### A. Preparation of MF resin

5 parts of caprolactam, 24 parts of water and 135 parts of formalin (30% formaldehyde in water having a pH of 9.4) were added to 100 parts of melamine. The condensation reaction was carried out at 95°C until the dilution capability (water tolerance) at 20°C of the resin was 1.2 kg of resin per kg of water. The formaldehyde/melamine ratio was 1.7. The viscosity of the resin is about 1800 mPa•s.

### B. Preparation of resin mixture

In a blade mixer, 150 parts of aluminium trihydrate Martinal ON906 (filler) and 0.44 parts of an aqueous p-toluenesulphonic acid solution (50 wt.% solids; catalyst), 0.66 parts of magnesium stearate (release agent) and a mixture of TiO₂, red and black iron oxide, and ultramarine blue (colour additives) were added to a 3:1 (wt/wt) mixture of the above prepared wet resin and spray dried MF-resin (Madurit MW 909™; a trademark of Hoechst Germany).

All amounts indicated above are relative to 100 parts of solid resin (total solid content of wet resin and Madurit). Stirring was carried out until a homogeneous mixture was obtained. The viscosity was adjusted by adding water to 55 Pa•s (Brookfield at 30°C).

### C. SMC Compounding

The resin mixture was transferred to two doctor boxes of a standard SMC line. The resin mixture was added on two carrier sheets (upper and lower, respectively). The type of carrier sheet used in this example is a PA film (Rodethul mono Yellow, from Eurozak, Diest, Belgium). Chopped fibrous material (the type and chopped length of the fibrous material used in each of the examples is shown in Table 1) is put on the lower carrier sheet in an amount of 20 wt.% (based on final dry compound, see point D). The upper and lower carrier sheets with the resin mixture and fibrous material were brought together. Impregnation of the fibrous material occurred in the compaction zone.

### D. Drying

Drying of the laminar product obtained after step C. was done, without removal of any of the carrier sheets, in either of two ways:
(i) Drying in tunnel oven (commonly being used for drying melamine impregnated laminates): temperature setting was 140°C and residence time was about 6 minutes. The residual free moisture content of the laminar products obtained was 2 wt.%;
(ii) Low temperature drying (at a temperature in the range of 20 to 100°C). This, of course, takes more time than (i). Drying of the material to the required 2 wt.% of free moisture took respectively about 300 hours at 20°C; about 150 hours at 40°C and about 75 hours at 60°C. In each of the experiments performed a corrugated cardboard sheet was positioned between all sheets of the laminar product. The consistency of the laminar product was judged as being excellent. The surface weight turned out to be 3000 ± 50 g/m². The free moisture content turned out to be 2.0 ± 0.35 wt.%. The glass content turned out to be 20 ± 0.8 wt.%.

### E. Production of moulded parts

To evaluate the visual appearance of moulded products, flat plates of 250 x 250 mm were moulded. Four layers of 180 x 180 mm were positioned on top of one another in the centre of the tool. Before moulding the foils could be removed from the laminar product without any problem. The laminar product was compression moulded in a closed mould at a temperature of 150°C and a pressure of 10 Mpa (100 bar). Closing speed is 1 mm/s. After 20 sec the mould was vented for 5 seconds. The total cure time was about 3 minutes. The press used was a 360 tonne parallel-travel press supplied by the Hoesch company in Germany. This resulted in plates of about 3 mm thickness.

It has also been shown that difficult 3D shapes could be produced, advantageously with preheating (at 100°C for 1 minute) between foils being in contact with the heating plates.

The distribution of the glass fibres over the moulded objects was found to be extremely good. This indicates an excellent flow behaviour during the moulding.

Test specimens were sawn out of the panels obtained for flexural tests (ISO 178) and Charpy impact properties (ISO 179). The mechanical properties measured for the different glass types are shown in Table 1.

Higher values of impact and flexural strength could be reached by leaving out the coarse pigments like TiO₂ and Fe₂O₃. When only using carbon black a Charpy impact of up to 80 kJ/m² was reached.

**Table 1.**

| Effect of different glass types (all 20 wt.% and 5 cm glass length) | | | | | |
|---|---|---|---|---|---|
| Supplier | Glass type | Tex number | Visual judgement-moulded plate | Flex. Strength [MPa] | Charpy Impact [kJ/m²] |
| Vetrotex | R07EX1 | 75 | - | n.d. | n.d. |
| | R07EX2 | 37.5 | - | n.d. | n.d. |
| | P204 | 100 | - | 160 | 38 |
| | P215 | 50 | - | 183 | 41 |
| | P243 | n.d. | + | 150 | 40 |
| PPG | 1084 | 300 | - | n.d. | n.d. |
| | 4854 | 68 | + | 193 | 43 |
| | 6428 | 45 | ± | 166 | 35 |
| OCF | 357 D AA | 48 | ± | 172 | 38 |
| | 954 | 75 | ± | 166 | 36 |

The visual judgement is based on the visibility of fibre bundles/strands in the final moulded products:
- means fibre bundles are clearly visible
+ means that no fibre bundles can be seen by bare eye.

### Example II Effects of carrier foils.

A material formulation as mentioned in Example I was produced on the SMC line between different types of carrier foil (see Table 2). During the impregnation no problems occurred. However, during drying in a tunnel oven at 140°C different behaviour of the carrier foils was observed. In some cases the upper and lower foils melted together at the edges and the pressure of the water vapor created a large balloon between the foils, resulting in blocking of the oven. In case of low temperature climate chamber drying the major drawback of these low water vapour permeable foils is that long drying times are needed.

**Table 2.**

| Effect of different carrier foils | | | |
|---|---|---|---|
| foil type | permeability DIN 53 122 [g/m²•day] | melting & ballooning | drying speed |
| Mono PA (Example I) | 25 | no | + |
| PA 6 | 50 | no | ++ |
| PE/PA/PE | 3 | yes | - |
| PA/PE/PA | 3 | no | - |
| HDPE | 3 | yes | - |

### Example III Production of fire retardant material

In the same way as described in Example I dry laminar products were produced with higher amounts of aluminium trihydrate and/or other fillers as indicated in Table 3. In this table, the amount of filler is expressed by the ratio of filler to resin.

In the same way as mentioned in Example I, plates were moulded and some of these were tested according to several (reaction to) fire standard tests. In Table 3 several of such typical tests performed on some of the formulations are mentioned, respectively:
(a) calorific potential Hₒ according to DIN 51 900;
(b) smoke density under flaming conditions according ASTM D2843-70;
(c) CO-emission under smouldering conditions according to DIN 53 436 at 400°C;
(d) Euro class rating according to the Single Burning Item (SBI) test; prEN-SBIxxxx (November 1999; draft).

**Table 3**

| Different fire retardant materials | | | | | | |
|---|---|---|---|---|---|---|
| filler type | Filler Resin ratio | Wt. % of Resin | Cal.Pot. [kJ/g] | Smoke density [%] | CO emission [ppm] | rating SBI test |
| ATH | 1.5 (ref.) | 32 | 5.03 | | 795 | worse than (A/B) S1 |
| ATH | 3.5 | 18 | 3.10 | < 5 | | (A/B) S1 |
| ATH | 4.0 | 16 | 2.80 | < 5 | 330 | (A/B) S1 |
| CaCO₃ | 3.0 | 20 | 3.06 | | 202 | n.d. |
| CaCO₃ | 3.35 | 19 | < 3*⁾ | | n.d. | (A/B) S2 |
| ATH/ CaCO₃ | 3.35 | 19 | < 3*⁾ | | n.d. | (A/B) S1 |

| | | | | | | |
|---|---|---|---|---|---|---|
| *⁾ exact value to follow | | | | | | |

This means that superb fire retardant materials can be made according to the present invention which are fulfilling the demands for an A2 classification.

## Claims

1. Reinforced laminar product comprising fibrous material and a thermosetting aminoplast resin mixture as matrix,
**characterized in that**
the reinforced laminar product comprises a removable first carrier sheet and a removable second carrier sheet
between which two sheets
(a) 95 to 50 wt.% of an aminoplast resin mixture, 20 to 90 wt.% of the resin mixture consisting of filler and/or other additive materials and
(b) 5 to 50 wt.% of fibrous material
is contained,
wherein at least 60 wt.% of the fibrous material consists of chopped fibres having an average length in the range of from 10 to 100 mm, the chopped fibres being 2D-randomly distributed in said resin mixture
and
wherein the free moisture content of the laminar product is less than 10 wt.% of the total weight of the laminar product.

2. Laminar product according to Claim 1,
**characterized in that** the aminoplast resin mixture is a melamine-aldehyde resin mixture.

3. Laminar product according to any one of Claims 1 or 2, **characterized in that** the free moisture content of the laminar product is in the range of from 0.3 to 10 wt.% of the total weight of the laminar product, preferably in the range of from 0.5 to 6 wt.% and most preferably in the range of from 1.0 to 3.0 wt.%.

4. Laminar product according to any one of Claims 1 - 3, **characterized in that** the chopped fibrous material consists of chopped glass fibres having an average length in the range of from 12 to 60 mm.

5. Laminar product according to Claim 4,
**characterized in that** the chopped fibrous material has strand or split-strand tex numbers in the range of from 18 to 300 tex, preferably split-strand tex numbers of from 35 to 100 tex.

6. Laminar product according to any one of Claims 1 - 5, **characterized in that** at least 85 wt.% of the fibrous material is 2D-randomly distributed in the resin mixture.

7. Laminar product according to any one of Claims 1 - 6, **characterized in that** part of the fibrous material consists of continuous fibres.

8. Laminar product according to any one of Claims 1 - 7, **characterized in that** the removable first and/or second carrier sheets have a permeability for water vapor at 23°C of 10 g/m²•day or more, preferably 25 g/m²•day or more, as determined according to DIN 53122.

9. Laminar product according to any one of Claims 1 - 8, **characterized in that** the fibrous material consists of glass fibres containing less than 1 wt.% of sizing and binder material as determined by the loss-on-ignition test.

10. Laminar product according to any one of Claims 2 - 9, **characterized in that** the aminoplast resin mixture comprises a melamine-aldehyde resin and a fire retardant additive, the amount of melamine-aldehyde resin being from 15 to 25 wt.%, preferably from 16 to 20 wt.%, of the total weight of the laminar product.

11. Process for manufacturing a reinforced laminar product comprising fibrous material and a thermosetting aminoplast resin mixture as matrix,
**characterized in that**
5 to 50 wt.% of a fibrous material of which at least 60 wt.% of the fibrous material consists of chopped fibres having an average length in the range of from 10 to 100 mm
is 2D-randomly distributed and impregnated in 95 to 50 wt.% of an aminoplast resin mixture, 20 to 90 wt.% of the resin mixture consisting of filler and/or other additive materials, and
having a viscosity in the range of from 5 to 250 Pa•s, preferably of from 20 to 100 Pa•s,
between a removable first carrier sheet and a removable second carrier sheet
and
the sheet moulding compound so obtained is dried, without removal of the carrier sheets, to a free moisture content of less than 10 wt.%.

12. Process according to Claim 11, **characterized in that** the aminoplast resin mixture is a melamine-aldehyde resin mixture.

13. Process according to any one of Claims 11 or 12,
**characterized in that** the sheet moulding compound is dried to a free moisture content in the range of from 0.3 to 10 wt.% of the total weight of the laminar product, preferably in the range of from 0.5 to 6 wt.% and most preferably in the range of from 1.0 to 3.0 wt.%.

14. Process according to any one of Claims 11 - 13,
**characterized in that** the sheet moulding compound is pre-cut to dimensions as desired before being dried.

15. Process according to any one of Claims 11 - 14,
**characterized in that** the chopped fibrous material consists of chopped glass fibres having an average length in the range of from 12 to 60 mm.

16. Process according to Claim 15, **characterized in that** the chopped fibrous material has strand or
split-strand tex numbers in the range of from 18 to 300 tex, preferably split-strand tex numbers of from 35 to 100 tex.

17. Process according to any one of Claims 11 - 16,
**characterized in that** at least 85 wt.% of the fibrous material is 2D-randomly distributed in the resin mixture.

18. Process according to any one of Claims 11 - 17,
**characterized in that** also continuous fibres are distributed and impregnated in the resin mixture.

19. Process according to any one of Claims 11 - 18,
**characterized in that** the removable first and/or second carrier sheets have a permeability for water vapor at 23°C of 10 g/m²•day or more, preferably 25 g/m²•day or more, as determined according to DIN 53122 .

20. Process according to any one of Claims 11 - 19,
**characterized in that** the fibrous material consists of glass fibres containing less than 1 wt.% of sizing and binder material as determined by the loss-on-ignition test.

21. Use of a laminar product according to any one of claims 1 - 10 or obtained through a process of any one of claims 11 - 20, upon removal of the first and second carrier sheets, in a closed mould production process.

22. Moulded product obtained in a closed mould process according to claim 21 with the aid of a laminar product according to any one of Claims 1 - 10 or obtained through a process of any one of claims 11 - 20.
